# FASCICULE DE BREVET EUROPEEN

(11) **EP 2 528 783 B1**
(45) Date de publication et mention de la délivrance du brevet: **06.09.2017**
(21) Numéro de dépôt: 11701460.5
(22) Date de dépôt: 27.01.2011
(51) Int. Cl.: B60R 21/205, B60R 21/215

(54) **SUPPORT DE MODULE DE COUSSIN DE SECURITE GONFLABLE RESISTANT AU VIEILLISSEMENT**
ALTERS-BESTÄNDIGES AIRBAGSTÜTZMODUL
AGE-RESISTANT SUPPORT OF AIRBAG MODULE

(30) Priorité: 29.01.2010 FR 1050619
(43) Date de publication de la demande: 05.12.2012
(73) Titulaire: Faurecia Intérieur Industrie, 92000 Nanterre (FR)
(72) Inventeur: SCHUPBACH, Thierry, F-60110 Meru (FR); ORY, Daniel, F-95130 Le Plessis-Bouchard (FR)
(74) Mandataire: Beaudouin-Lafon, Emmanuel
(86) Numéro de dépôt international: PCT/EP2011/000366
(87) Numéro de publication internationale: WO 2011/092015

(56) Documents cités:
- DE-A1- 19 930 754
- DE-A1-102007 023 075
- US-A- 5 851 023
- US-A1- 2004 119 267

## Description

L'invention concerne un support destiné à porter un module de coussin de sécurité gonflable monté sous le corps de planche de bord d'un véhicule automobile.

### ARRIERE PLAN DE L'INVENTION

Dans un tel agencement, la planche de bord qui est située dans l'habitacle au dessous du pare-brise, comprend un corps de planche ayant une face inférieure portant un module de coussin gonflable de sécurité. Concrètement, ce module qui comporte une enceinte renfermant le coussin et ses moyens de gonflage, est monté face à une ouverture délimitée dans le corps de la planche de bord.

L'ouverture qui est généralement rectangulaire est par exemple définie par une ou plusieurs lignes d'affaiblissement constituant selon le cas un ou deux volets prévus pour s'ouvrir sur déploiement du coussin. Le support qui constitue un canal de tir du coussin, est situé sous la face inférieure du corps de planche de bord à laquelle il est fixé, et le module de coussin de sécurité qu'il porte est fixé à la face inférieure de ce support.

Ce support est ainsi interposé entre une face de fixation du module de sécurité, qui est plane et standard, et la face inférieure du corps de planche de bord qui est bombée et dont le galbe diffère d'un modèle de véhicule à un autre.

La face supérieure du corps de la planche de bord est une surface bombée sensiblement continue qui peut être recouverte d'un revêtement comprenant typiquement une mousse et une peau, l'agencement de coussin de sécurité gonflable étant à peu près invisible au niveau de la face supérieure.

Lorsqu'un choc est détecté, le coussin se gonfle en exerçant une pression à la face interne du ou des volets, provoquant ainsi l'ouverture, à l'encontre du revêtement qui se déchire. Cette ouverture permet au coussin de se déployer à travers la planche de bord, vers l'habitacle, pour protéger un occupant du véhicule en cas de choc.

Comme la planche de bord s'étend sur une surface relativement importante, notamment sur toute la largeur du véhicule qu'elle équipe, et que son corps est fabriqué dans un matériau relativement souple, son galbe ou sa courbure se modifie sensiblement au cours du vieillissement du véhicule, notamment compte tenu des variations thermiques importantes résultant notamment de l'ensoleillement important auquel une telle planche de bord est soumise.

En pratique, l'empreinte du support de module finit par devenir apparente à la face supérieure de la planche de bord : le galbe de la planche de bord se modifie alors que celui du support fixé à cette planche de bord ne change pas, du fait que le support est fabriqué dans un matériau plus rigide que cette planche. Concrètement, l'empreinte du support de module devient apparente au niveau de la face supérieure du corps de planche de bord.

Une solution pour résoudre ce problème consiste à fabriquer le support dans un matériau ayant une souplesse comparable à celle du corps de planche de bord.

Dans ce cas, le support se déforme avec la planche de bord au fil de la vie du véhicule, de sorte que malgré la déformation de cette planche de bord, l'empreinte du support reste invisible sur la face supérieure du corps de planche de bord.

Mais dans ce cas, la fixation du module de coussin gonflable au support s'avère problématique, car le matériau du support est trop souple pour permettre de réaliser une fixation présentant une tenue mécanique suffisante. Ce problème est d'autant plus important qu'il peut se traduire par le décrochement du module lorsque le coussin se gonfle.

En cas de décrochement du module, le coussin ne peut pas exercer la pression suffisante sur la face arrière du corps de planche de bord pour permettre l'ouverture du volet, de sorte que le coussin ne peut simplement pas se déployer dans l'habitacle.

Le document DE102007023075 est considéré comme étant l'état de la technique le plus proche de l'objet de la revendication 1 et décrit un support conforme au préambule de la revendication 1.

### OBJET DE L'INVENTION

Le but de l'invention est de proposer un agencement assurant que le support de module reste invisible au fil du vieillissement du véhicule tout en offrant une fixation du module présentant une tenue mécanique suffisante.

### RESUME DE L'INVENTION

A cet effet, l'invention a pour objet un support pour module de coussin de sécurité gonflable selon la revendication 1. L'invention concerne également un support tel que défini ci-dessus, dont la portion haute est un élément distinct de la planche de bord.

L'invention concerne également un support tel que défini ci-dessus, dans lequel le module de coussin de sécurité gonflable est fixé à la portion basse au moyen d'éléments rapportés.

L'invention concerne également un support tel que défini ci-dessus, dans lequel le module de coussin de sécurité gonflable est fixé à la portion basse au moyen de vis traversant ce module en étant vissées dans l'épaisseur de cette portion basse.

L'invention concerne également un support tel que défini ci-dessus, dans lequel le matériau de la portion basse est un matériau composite comportant du polypropylène intégrant des fibres de verre.

L'invention concerne également un support tel que défini ci-dessus, dans lequel le matériau de la portion haute est un matériau de type thermoplastique élastomère.

L'invention concerne également un coussin de sécurité gonflable comprenant une planche de bord et un module de coussin de sécurité gonflable porté par un support tel que défini ci-dessus.

L'invention concerne également un agencement de coussin de sécurité gonflable comprenant une planche de bord et un module de coussin de sécurité gonflable porté par un support tel que défini ci-dessus et dont la partie haute est intégrée à la planche de bord.

La figure unique est une vue en montrant le support selon l'invention en section lorsqu'il est monté à la face inférieure d'une planche de bord et qu'il porte un module de coussin de sécurité gonflable.

### DESCRIPTION DETAILLEE DE L'INVENTION

L'idée à la base de l'invention est de prévoir un support de module dont la portion haute est souple pour épouser la déformation du galbe de la planche de bord au fil de son vieillissement, et dont la portion basse est rigide pour constituer un moyen de fixation du module qui présente une tenue mécanique suffisante.

L'agencement de coussin de sécurité gonflable généralement repéré par 1 dans la figure unique comprend un corps de planche de bord 2 présentant une face inférieure 3 à laquelle est fixé un support 4 portant lui-même le module de coussin de sécurité gonflable 6.

Le support 4 selon l'invention comprend une portion haute 7 fixée à la face inférieure du corps de planche de bord, cette portion haute étant fabriquée dans un matériau relativement souple, prolongée par une portion basse 8 qui est elle fabriquée dans un matériau plus rigide pour recevoir le module de coussin gonflable.

Comme on l'aura compris et comme visible sur la figure, le support 4 est une pièce distincte de la planche de bord sur laquelle il est fixé.

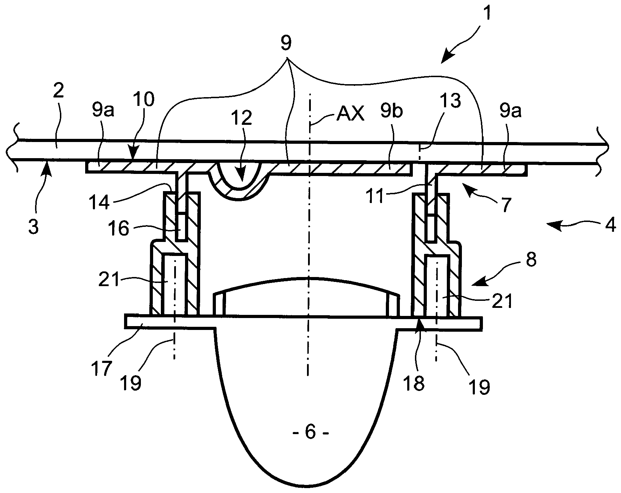

La portion haute 7 du support 4 comprend une paroi supérieure 9 qui est ici généralement plane, et dont la face supérieure est fixée directement à la face inférieure 3 du corps de planche 2, ainsi qu'une paroi circonférentielle supérieure 11 dépassant de la face inférieure de la paroi 9 en s'étendant perpendiculairement à celle-ci.

La paroi circonférentielle supérieure 11 s'étend tout autour d'un axe AX qui est normal au corps de planche de bord et qui correspond à la direction selon laquelle le coussin gonflable se déploie, de sorte que cette paroi délimite la partie supérieure du canal de tir que constitue le support 4. En vue de dessus, c'est-à-dire lorsque vue selon la direction AX, la paroi circonférentielle définit un contour fermé de forme circulaire, carrée, rectangulaire ou autre.

Dans l'exemple de la figure qui est schématique, le corps de planche de bord 2 est plan, et la paroi supérieure 9 du support 4 est elle aussi plane. Mais le corps de planche de bord 2 est le plus souvent galbé, et de même, la paroi supérieure 9 est elle aussi galbée de manière à épouser la forme de ce corps de planche de bord auquel elle est fixée par collage, soudage aux ultrasons ou analogue.

La paroi supérieure 9 comporte d'une part une région périphérique 9a qui entoure la paroi circonférentielle supérieure 11 en la prolongeant latéralement, et une région centrale 9b de cette paroi supérieure 9 qui correspond à une plaque de renforcement d'un volet qui s'ouvre sur déploiement du coussin de sécurité.

Comme visible dans la figure, un côté de la partie centrale 9b de la paroi supérieure 9 est séparé de la paroi circonférentielle 11 par une portion 12 qui est espacée et décollée de la face inférieure 3, de manière à constituer une charnière. Le côté opposé de la partie centrale 9b est lui espacé de la paroi circonférentielle 11 constituant ainsi une discontinuité de la paroi supérieure. Le corps de planche de bord 2 comporte une ligne d'affaiblissement 13 formant amorce de rupture, délimitant le volet et située au niveau de cette discontinuité.

En pratique, lorsque le coussin gonflable se déploie, il exerce à la face inférieure de la partie centrale 9b de la paroi 9 des efforts qui provoquent le déchirement du corps de planche de bord 2 pour permettre l'ouverture du volet par pivotement autour de la région 12 formant charnière, ce qui permet au coussin de se déployer vers l'habitacle, à travers la planche de bord.

La portion basse 8 du support 4 constitue une paroi circonférentielle délimitant la partie inférieure du canal de tir que constitue le support 4. Cette paroi circonférentielle inférieure a une épaisseur très supérieure à celle de la paroi circonférentielle supérieure 11 qu'elle prolonge. En vue de dessus selon l'axe AX, elle a une forme générale correspondant à un contour fermé circulaire, carré ou rectangulaire correspondant à celui de la paroi circonférentielle supérieure 11 vue de dessus.

Comme visible sur la figure unique, le bord supérieur 14 de la portion basse 8 comporte dans sa face supérieure 10 une rainure circonférentielle 16 dans laquelle est engagé le bord inférieur de la paroi circonférentielle supérieure 11. Plus concrètement, la portion basse 8 a sa partie supérieure surmoulée autour du bord inférieur la paroi circonférentielle 11, de manière à être rigidement solidarisée à la portion haute 7.

Comme indiqué plus haut, la paroi circonférentielle inférieure que constitue la portion basse 8 a une épaisseur beaucoup plus importante que la paroi circonférentielle supérieure 11, de manière à pouvoir recevoir des éléments de fixation du module de coussin de sécurité 6. Ces éléments de fixation peuvent être des vis, des inserts, des goujons ou des écrous.

Plus particulièrement, le module 6 comprend une platine plane 17 de dimensions supérieures à celles de la portion basse 8 en vue de dessus, et qui est appliqué contre la face inférieure 18, c'est-à-dire le bord inférieur, de la portion basse 8 en y étant fixé.

Cette fixation est assurée au moyen d'un ensemble de vis non représentées qui traversent chacune la platine 17 et le bord inférieur 18 pour être vissées dans l'épaisseur de la paroi que constitue la portion basse 8. Ces vis sont représentées de manière symbolique par deux traits mixtes 19 et les trous correspondants, qui peuvent être taraudés sont repérés par 21.

Dans l'exemple des figures, la portion haute 7 est fabriquée dans un matériau compatible avec le matériau du corps de planche de bord, ce matériau étant typiquement un thermoplastique élastomère (TPE), qui présente la souplesse appropriée pour se déformer conjointement avec le corps de planche de bord. Eventuellement, la portion haute peut être moulée conjointement avec le reste du corps de planche de bord.

Avantageusement, la portion haute est fabriquée dans un matériau présentant une souplesse plus importante que le matériau dans lequel la planche de bord est fabriquée.

En ce qui concerne la portion basse, elle est fabriquée avantageusement en un matériau composite comprenant du polypropylène pouvant intégrer de la fibre de verre (PPGF). Ce matériau est suffisamment rigide et dur pour recevoir les vis de fixation du module de coussin, ou des éléments d'encrage de tout autre moyen de fixation capable de supporter les efforts exercés par le coussin lorsqu'il se déploie dans le canal de tir.

Cette portion basse 8 peut également être fabriquée dans d'autres matériaux dès lors qu'ils présentent les caractéristiques mécaniques de rigidité et de tenue appropriées. Par exemple, elle peut être fabriquée en alliage acrylonitrile butadiène styrène avec polycarbonate (ABS/PC), ou encore en polyamide chargé de fibre de verre (PA/GF).

## Revendications

1. Support (4) pour module de coussin de sécurité gonflable (6) destiné à être monté à une face inférieure (3) d'une planche de bord (2) de véhicule automobile et à s'étendre sous cette face inférieure, le module de coussin de sécurité gonflable (6) comportant une enceinte renfermant le coussin et ses moyens de gonflage, ce support constituant un canal de tir formant un contour fermé dans lequel le coussin est guidé pour se déployer vers l'habitacle à travers la planche de bord (2), le support (4) comprenant
une portion haute (7) comprenant une paroi supérieure (9) de fixation à la planche de bord (2), ainsi qu'une paroi circonférentielle supérieure (11) s'étendant perpendiculairement à la paroi supérieure (9), la paroi circonférentielle supérieure (11) délimitant une partie supérieure du canal de tir, et
une portion basse (8) constituant une paroi circonférentielle délimitant la partie inférieure du canal de tir et prolongeant la paroi circonférentielle supérieure (11), la portion basse (8) recevant le module (6),
**caractérisé en ce que** la portion haute (7) et la portion basse (8) sont deux pièces distinctes rigidement solidarisées l'une à l'autre tout en étant fabriquées dans deux matériaux différents, le matériau de la portion haute (7) étant plus souple que le matériau de la portion basse (8),
**en ce que** la portion basse (8) est rigidement solidarisée à la portion haute (7) par surmoulage,
et **en ce que** ladite portion basse (8) présente une épaisseur très supérieure à celle de la paroi circonférentielle supérieure (11), de sorte à pouvoir recevoir des éléments de fixation du module de coussin de sécurité (6).

2. Support selon la revendication 1, dont la portion haute (7) est un élément distinct de la planche de bord (2) .

3. Support selon l'une des revendications 1 à 2, dans lequel le module de coussin de sécurité gonflable est fixé à la portion basse (8) au moyen d'éléments rapportés.

4. Support selon l'une des revendications 1 à 3, dans lequel le module de coussin de sécurité gonflable est fixé à la portion basse (8) au moyen de vis traversant ce module en étant vissées dans l'épaisseur de cette portion basse (8).

5. Support selon l'une des revendications 1 à 4, dans lequel le matériau de la portion basse (8) est un matériau composite comportant du polypropylène intégrant des fibres de verre.

6. Support selon l'une des revendications 1 à 5, dans lequel le matériau de la portion haute (7) est un matériau de type thermoplastique élastomère.

7. Agencement de coussin de sécurité gonflable comprenant une planche de bord (2) et un module de coussin de sécurité gonflable (6) porté par un support (4) tel que défini dans la revendication 2.

8. Agencement de coussin de sécurité gonflable comprenant une planche de bord (2) et un module de coussin de sécurité gonflable (6) porté par un support (4) selon la revendication 1 ou selon l'une des revendications 3 à 5, et dans lequel la partie haute (8) du support est intégrée à la planche de bord (2).

9. Agencement de coussin de sécurité gonflable selon la revendication 7 ou 8, dans lequel la partie haute (8) du support est fabriquée dans un matériau présentant une souplesse appropriée pour se déformer conjointement avec la planche de bord.

## Patentansprüche

1. Träger (4) für ein Luftkissenmodul (6), das dazu bestimmt ist, an einer Unterseite (3) eines Armaturenbretts (2) eines Kraftfahrzeugs montiert zu werden und sich unter dieser Unterseite zu erstrecken, wobei das Luftkissenmodul (6) einen geschlossenen Raum umfasst, der das Kissen und dessen Aufblasmittel einschließt, wobei dieser Träger einen Schusskanal darstellt, der eine geschlossene Kontur bildet, in der das Kissen geführt wird, um sich durch das Armaturenbrett (2) hindurch in den Fahrgastraum zu entfalten, wobei der Träger (4) umfasst
einen oberen Abschnitt (7), der eine obere Wand (9) zur Befestigung an dem Armaturenbrett (2) und eine obere Umfangswand (11) umfasst, die sich senkrecht zur oberen Wand (9) erstreckt, wobei die obere Umfangswand (11) einen oberen Teil des Schusskanals begrenzt, und einen unteren Abschnitt (8), der eine Umfangswand bildet, die den unteren Teil des Schusskanals begrenzt und die obere Umfangswand (11) verlängert, wobei der untere Abschnitt (8) das Modul (6) aufnimmt, **dadurch gekennzeichnet, dass** der obere Abschnitt (7) und der untere Abschnitt (8) zwei getrennte Teile sind, die starr miteinander verbunden sind, während sie aus zwei unterschiedlichen Materialien hergestellt sind, wobei das Material des oberen Abschnittes (7) flexibler als das Material des unteren Abschnittes (8) ist,
dass der untere Abschnitt (8) durch Überformung starr mit dem oberen Abschnitt (7) verbunden ist,
und dass der genannte untere Abschnitt (8) eine Dicke aufweist, die viel größer als die der oberen Umfangswand (11) ist, so dass er Elemente zur Befestigung des Luftkissenmoduls (6) aufnehmen kann.

2. Träger nach Anspruch 1, dessen oberer Abschnitt (7) ein von dem Armaturenbrett (2) getrenntes Element ist.

3. Träger nach einem der Ansprüche 1 bis 2, bei dem das Luftkissenmodul an dem unteren Abschnitt (8) mittels Anbauelementen befestigt ist.

4. Träger nach einem der Ansprüche 1 bis 3, bei dem das Luftkissenmodul an dem unteren Abschnitt (8) mittels Schrauben fixiert ist, die durch dieses Modul hindurchgehen, indem sie in die Dicke dieses unteren Abschnittes geschraubt werden.

5. Träger nach einem der Ansprüche 1 bis 4, bei dem das Material des unteren Abschnittes (8) ein Verbundwerkstoff ist, der glasfaserverstärktes Polypropylen umfasst.

6. Träger nach einem der Ansprüche 1 bis 5, bei dem das Material des oberen Abschnittes (7) ein Material vom Typ thermoplastisches Elastomer ist.

7. Luftkissen-Anordnung, umfassend ein Armaturenbrett (2) und ein Luftkissenmodul (6), das von einem Träger (4), wie er in Anspruch 2 definiert ist, getragen wird.

8. Luftkissen-Anordnung, umfassend ein Armaturenbrett (2) und ein Luftkissenmodul (6), das von einem Träger (4) nach Anspruch 1 oder nach einem der Ansprüche 3 bis 5 getragen wird, und bei der der obere Abschnitt (8) des Trägers in das Armaturenbrett (2) integriert ist.

9. Luftkissen-Anardnung nach Anspruch 7 oder 8, bei der der obere Abschnitt (8) des Trägers aus einem Material hergestellt ist, das eine geeignete Flexibilität aufweiset, um sich zusammen mit dem Armaturenbrett zu verformen.

## Claims

1. A mounting (4) for an inflatable airbag module (6) intended to be mounted on a lower face (3) of a dashboard (2) of a motor vehicle and to extend under this lower face, the inflatable airbag module comprising a housing enclosing the airbag and its inflating means, this mounting constituting a firing channel forming a closed contour in which the airbag is guided to deploy towards the cab through the dashboard (2), the mounting (4) comprising
an upper portion (7) comprising an upper wall (9) for fixing to the dashboard (2) and a circumferential upper wall (11) extending perpendicular to the upper wall (9), the circumferential upper wall (11) delimiting an upper part of the firing channel, and
a lower portion (8) constituting a circumferential wall delimiting the lower part of the firing channel and prolonging the circumferential upper wall (11), the lower portion (8) receiving the module (6),
**characterized in that** the upper portion (7) and the lower portion (8) are two separate parts rigidly connected together while being made of two different materials, the material of the upper portion (7) being more flexible than the material of the lower portion (8)
**in that** the lower portion (8) is rigidly connected to the upper portion (7) by over molding,
and **in that** said lower portion (8) present a thickness that is very greater than the thickness of the upper circumferential wall (11) so as to be able to receive some fixation means of the inflatable airbag module (6).

2. The mounting as claimed in claim 1, the upper portion (7) of which is a separate element from the dashboard (2).

3. The mounting as claimed in any of claims 1 to 2, wherein the inflatable airbag module is attached to the lower portion (8) by means of separate elements.

4. The mounting as claimed in any of claims 1 to 3, wherein the inflatable airbag module is fixed to the lower portion (8) by means of screws passing through this module on being screwed into the thickness of this lower portion (8).

5. The mounting as claimed in any of claims 1 to 4, wherein the material of the lower portion (8) is a composite material comprising glass-fiber reinforced polypropylene.

6. The mounting as claimed in any of claims 1 to 5, wherein the material of the upper portion (7) is a thermoplastic elastomer-type material.

7. An arrangement of an inflatable airbag comprising a dashboard (2) and an inflatable airbag module (6) carried by a mounting (4) as defined in claim 2.

8. An arrangement of an inflatable airbag comprising a dashboard (2) and an inflatable airbag module (6) carried by a mounting (4) as claimed in claim 1 or as claimed in any of claims 3 to 5 and wherein the upper part (8) of the mounting is integrated in the dashboard (2).

9. The arrangement of an inflatable airbag as claimed in claim 7 or 8, wherein the upper part (8) of the mounting is made of a material with a flexibility that is suitable for deforming with the dashboard.
